# EUROPEAN PATENT SPECIFICATION

(11) **EP 2 340 914 B1**
(45) Date of publication and mention of the grant of the patent: **26.12.2012**
(21) Application number: 10016091.0
(22) Date of filing: 27.12.2010
(51) Int. Cl.: B23Q 17/22, B23Q 17/24, G01B 11/00, G01B 21/04

(54) **Detecting assembly for a multi-axis machine tool**
Detektionsanordnung für ein Mehrachsen-Maschinenwerkzeug
Ensemble de détection pour machine-outil à plusieurs axes

(30) Priority: 29.12.2009 TW 98145473
(43) Date of publication of application: 06.07.2011
(73) Proprietor: National Formosa University, Yunlin Hsien (TW)
(72) Inventor: Jywe, Wen-Yuh, Yunlin Hsien (TW); Liu, Chien-Hung, Yunlin Hsien (TW); Hsu, Tung-Hui, Yunlin Hsien (TW); Hsu, Chia-Ming, Yunlin Hsien (TW)
(74) Representative: Hauck Patent- und Rechtsanwälte

(56) References cited:
- EP-A1- 1 696 289
- FR-A1- 2 928 289
- US-A1- 2002 126 297
- US-B1- 6 269 284
- TSUTSUMI M ET AL: "Identification and compensation of systematic deviations particular to 5-axis machining centers", INTERNATIONAL JOURNAL OF MACHINE TOOLS AND MANUFACTURE, ELSEVIER, US, [Online] vol. 43, no. 8, 1 June 2003 (2003-06-01), pages 771-780, XP002615578, ISSN: 0890-6955, DOI: DOI:10.1016/S0890-6955(03)00053-1 Retrieved from the Internet: URL:http://www.sciencedirect.com/science?_ ob=MImg&_imagekey=B6V4B-48BKNN7 7-1X&_cdi=5754&_user=987766&_pii=S08906955 03000531&_origin=search&_c overDate=06%2F30%2F2003&_sk=999569991&view =c&wchp=dGLzVtz-zSkWA&md5=8 03f21bebef3e17a2b6fa8ad40cc2933&ie=/sdarti cle.pdf> [retrieved on 2011-01-04]

## Description

### 1. Field of the Invention

The present invention relates to a detecting assembly for multi-axis machine tools, and more particularly to a detecting assembly that can easily measure the accuracy of the multi-axis machine tool and reduce the cost of detecting the errors of the multi-axis machine tool.

### 2. Description of the Prior Arts

With improvements of manufacturing technology, conventional multi-axis machine tools have been extensive used in machine work. A conventional three-axis machine tool usually has three linear axes to move a work-piece relative to a tool of the conventional machine tool. The conventional multi-axis machine tool may further have multi-rotation axes. For example, a conventional six-axis machine tool has three linear axes (X-, Y and Z-axes) and three rotation axes (A-, B- and C-axes). The A-axis is rotation around the X-axis, the B-axis is rotation around the Y-axis and the C-axis is rotation around the Z-axis. A conventional five-axis machine tool has three linear axes and two rotation axes. The linear axes and the rotation axes of the conventional multi-axis machine tool can be set with different positions and machining directions to manufacture work-pieces with complicated structures and to provide a preferred working accuracy.

Three conventional detecting assemblies are used to enhance technical grade and process precision of a multi-axis machine tool. The first detecting assembly is a three-degree of freedom detecting assembly that can be used to adjust angles of the rotation axes of the conventional multiple-axis machine. The second detecting assembly is a simple detecting assembly that can be used to detect the X-axis, the Y-axis and the Z-axis of the conventional multiple-axis machine to analyze the errors of the rotation axes. The third detecting assembly is a checking assembly that can detect the errors of the conventional multiple-axis machine by laser adjustment and soft reparation.

Although the conventional detecting assemblies can provide a detecting-correcting effect to the multi-axis machine tool, the structures of the conventional detecting systems are complicated so assembly and the disassembly of the conventional detecting systems is difficult and inconvenient. Then, the cost and time of detecting the errors of the multi-axis machine tool will be increased.

US-2002/0126297 discloses a detecting assembly according to the preamble of claim 1 comprising a detector with a spherical lens, a light source and a sensor of reflected light.

To overcome the shortcomings, the present invention provides a detecting assembly for a multi-axis machine tool to mitigate or obviate the aforementioned problems.

The main objective of the present invention is to provide a detecting assembly for a multi-axis machine tool, and more particularly to a detecting assembly that can easily detect the errors of the multi-axis machine tool and reduce cost of detecting the errors of the multi-axis machine tool.

The detecting assembly for a multi-axis machine tool having a spindle and a turntable in accordance with the present invention comprises a detector, a lens device and a computer. The detector is connected to the spindle and has a mounting frame, a first detecting segment and a second detecting segment. The mounting frame is connected to the spindle and has a connecting rod, a bottom board and multiple mounting boards. The detecting segments are mounted on the mounting boards and each detecting segment has a light source and a sensor to receive light from the light source. The lens device is mounted securely on the turntable, extends into the detector between the mounting boards and has a supporting shaft and a spherical lens. The supporting shaft is mounted securely on the turntable. The spherical lens is mounted on an upper end of the supporting shaft to align light emitted from the light sources with the corresponding sensors via the spherical lens. The computer is electrically connected to the detector to receive signals outputted from the sensors of the detecting segments of the detector and has a signal processor to calculate and analyze received signals.

Other objectives, advantages and novel features of the invention will become more apparent from the following detailed description when taken in conjunction with the accompanying drawings.

### IN THE DRAWINGS:

Fig. 1 is a perspective view of a first embodiment of a detecting assembly in accordance with the present invention;
Fig. 2 is a perspective view of the detecting assembly in Fig. 1 mounted on a multi-axis machine tool;
Fig. 3 is an enlarged perspective view of the detecting assembly in Fig. 2;
Fig. 4 is a block diagram of the detecting assembly for a multi-axis machine tool in Fig. 1; and
Fig. 5 is a perspective view of a second embodiment of a detecting assembly in accordance with the present invention.

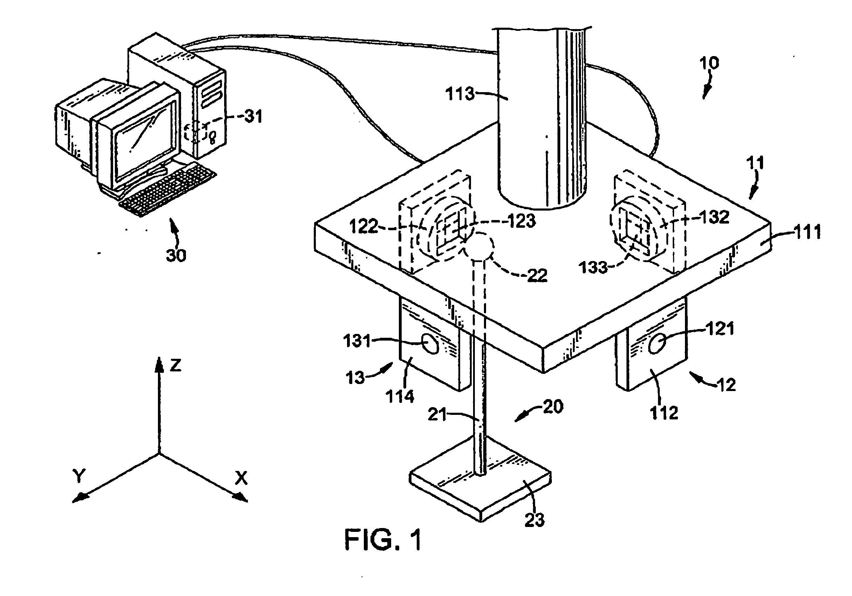

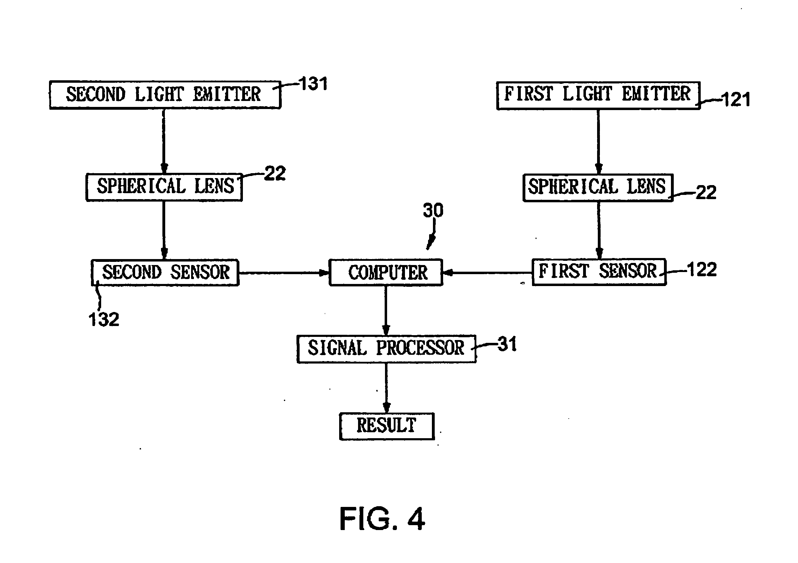

With reference to Figs. 1 to 4, a detecting assembly for a multi-axis machine tool 50 in accordance with the present invention comprises a detector 10, a lens device 20 and a computer 30. The multi-axis machine tool 50 has three linear axes (X-, Y and Z-axes), two rotation axes (A- and C-axes), a spindle 51 and a turntable 52. The spindle 51 is defined in the Z-axis of the multi-axis machine tool 50. The turntable 52 is defined below the spindle 51 and is rotates around the Z-axis of the multi-axis machine tool 50.

The detector 10 is connected to the spindle 51 of the multi-axis machine tool 50 and has a mounting frame 11, a first detecting segment 12 and a second detecting segment 13.

The mounting frame 11 is connected to the spindle 51 of the multi-axis machine tool 50 and has a connecting rod 113, a bottom board 111, two first mounting boards 112 and two second mounting boards 114. The connecting rod 113 is connected to the spindle 51 and has a connecting end and a forming end. The connecting end of the connecting rod 113 is inserted into the spindle 51. The bottom board 111 is formed on the forming end of the connecting rod 113 and has a bottom surface facing the turntable 52 of the multi-axis machine tool 50. The first mounting boards 112 are formed on and protrude from the bottom surface of the bottom board 111 and are arranged in a line parallel to the X-axis of the multi-axis machine tool 50, and the first mounting boards 112 have inner faces facing each other. The second mounting boards 114 are formed on and protrude from the bottom surface of the bottom board 111 and are arranged in a line parallel to the Y-axis of the multi-axis machine tool 50 and the second mounting boards 114 have inner faces facing each other.

The first detecting segment 12 is mounted on the mounting frame 11 and has a first light source 121 and a first sensor 122. The first light source 121 is mounted on one of the first mounting boards 112 of the mounting frame 11. Preferably, the first light source 121 emits a collimating beam, a focusing beam, a visible light or an invisible light. The first sensor 122 may be a photoelectric sensor and is mounted on the inner face of another first mounting board 112 that faces the first light source 121 to receive light from the light source and has a receiving surface 123. The receiving surface 123 is formed on the first sensor 122 perpendicular to the first light source 121.

The second detecting segment 13 is mounted on the mounting frame 11 and has a second light source 131 and a second sensor 132. The second light source 131 is mounted on one of the second mounting boards 114 of the mounting frame 11. Preferably, the second light source 131 emits a collimating beam, a focusing beam, a visible light or an invisible light. The second sensor 132 may be a photoelectric sensor and is mounted on the inner face of another second mounting board 114 that faces the second light source 131 to receive the light source and has a receiving surface 133. The receiving surface 133 is formed on the second sensor 132 perpendicular to the second light source 131.

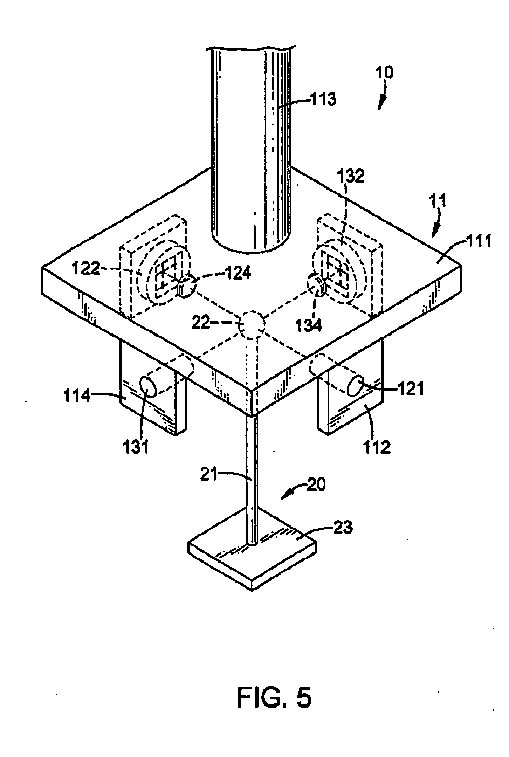

With further reference to Fig. 5, a second embodiment of the detecting assembly for a multi-axis machine tool 50 in accordance with the present invention further comprises two lenses 124, 134. One of the lenses 124, 134 is mounted between the first light source 121 and the first sensor 122 and the other lens 134 is mounted between the second light source 131 and the second sensor 132.

The lens device 20 is mounted securely on the turntable 52 of the multi-axis machine tool 50, extends into the detector 10 between the mounting boards 112, 114 and has a supporting shaft 21 and a spherical lens 22. The supporting shaft 21 is mounted securely on the turntable 52 of the multi-axis machine tool 50 and has a lower end, an upper end and a magnet 23. The magnet 23 is mounted on the lower end of the supporting shaft 21 and is attracted to the turntable 52 of the multi-axis machine tool 50. The upper end of the supporting shaft 21 is extended into the detector 10 between the inner faces of the mounting boards 112, 114. The spherical lens 22 is mounted on the upper end of the supporting shaft 21 so the light sources 121, 131 of the detecting segments 12, 13 emit light to the corresponding sensors 122, 132 via the spherical lens 22.

The computer 30 is electrically connected to the detector 10 to receive signals outputted from the sensors 122, 132 of the detecting segments 12, 13 of the detector 10 and has a signal processor 31 to calculate and analyze received signals.

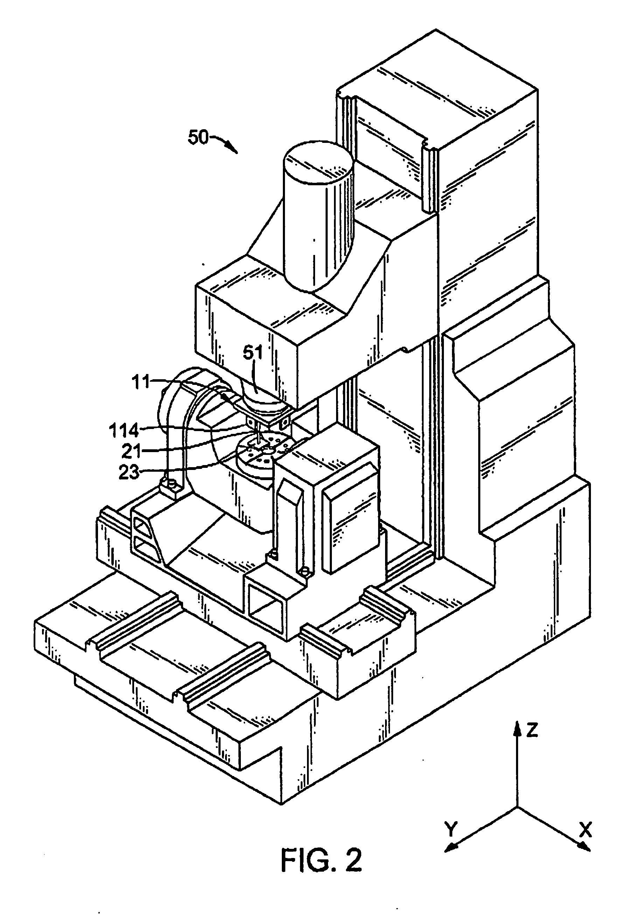

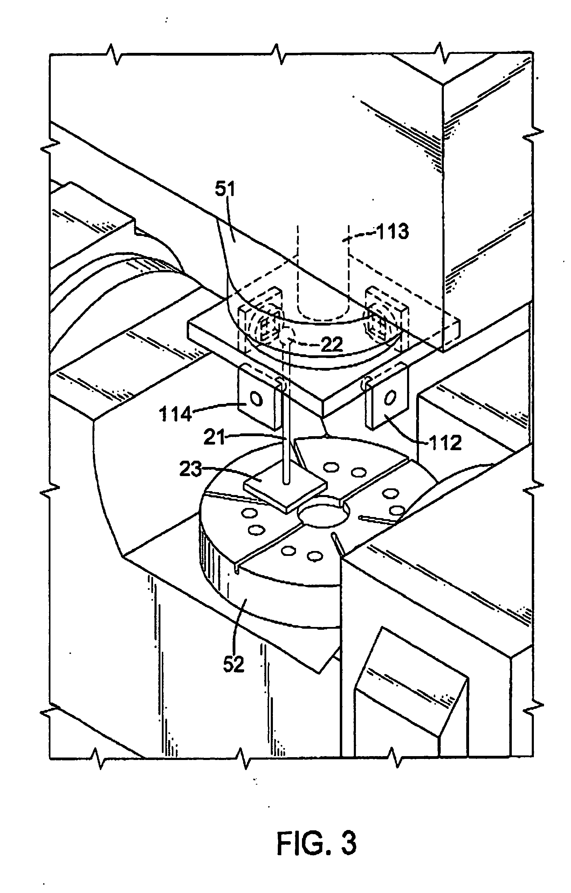

With reference to Figs. 2 and 3, after the detector 10 and the lens device 20 are respectively mounted on the spindle 51 and the turntable 52 of the multi-axis machine tool 50 to hold the spherical lens 22 between the mounting boards 112, 114, the turntable 52 is moved along the X-axis and the Y-axis of the multi-axis machine tool 50 so the light sources 121, 131 emit light through the spherical lens 22 and into the receiving surfaces 123, 133 of the corresponding sensors 122, 132. The receiving surfaces 123, 133 will produce received signals corresponding to the emitting positions of the light sources 121, 131. The received signals will be sent to and calculated and analyzed by the signal processor 31 of the computer 30.

In accordance with the present invention, the first light source 121 emits a light source to the first sensor 122 via the spherical lens 22 and the light source of the first light source 121 is parallel to the X-axis of the multi-axis machine tool 50. When the first light source 121 is off-center from the spherical lens 22, the first sensor 122 can detect signals of Y-axis (PSD_{1y}) and Z-axis (PSD_{1Z}). The second light source 131 emits a light source to the second sensor 132 via the spherical lens 22 and the light source of the second light source 131 is parallel to the Y-axis of the multi-axis machine tool 50. When the light source of the second light source 131 is off-center from the spherical lens 22, the second sensor 122 can detect a signal of X-axis (PSD₂ₓ) and Z-axis (PSD_{2Z}).

An offset of the center of the spherical lens 22 can be calculated by the equations as follows:
The offset of the center of the spherical lens 22 in X-axis: ΔX = PSD₂ₓ ;
The offset of the center of the spherical lens 22 in Y-axis: ΔY = PSD_{1Y}; and
The offset of the center of the spherical lens 22 in Z-axis: ΔZ = (PSD_{1z}+PSD_{2Z})/2.

When the offset of the center of the spherical 22 is calculated by the aforementioned equations in the signal processor 31 of the computer 30, a signal corresponds to the offset of the center of the spherical lens 22 will send to the multi-axis machine tool 50 to adjust the position of the turntable 52 along the X-axis and the Y-axis of the multi-axis machine tool 50. Therefore, the spherical lens 22 on the turntable 52 can be moved to let align the light sources 121, 131 and the spherical lens 22 for calibration.

Preferably, the detecting assembly in the present invention has two operating types, one of the operating types is fixing the detector 10 and moving the spherical lens 22 relative to the detector 10 to align the light sources 121, 131 through the spherical lens 22 with the corresponding the sensors 122, 132 to calculate the offset of the center of the spherical lens 22. The other operating type is fixing the spherical lens 22 and moving the detector 10 relative to the spherical lens 22 to align the light sources 121, 131 through the spherical lens 22 with the corresponding the sensors 122, 132 to calculate the offset of the center of the spherical lens 22.

After calculating the offset of the center of the spherical lens 22, the errors of the multi-axis machine tool 50 can be analyzed by the signal processor 31 of the computer 30. Furthermore, the detector 10 also can be mounted on the turntable 52 and the lens device 20 can be connected to the spindle 51 of the multi-axis machine tool 50 to find the errors of the multi-axis machine tool 50.

The detecting assembly for a multi-axis machine tool 50 in accordance with the present invention uses the light sources 121, 131, the sensors 122, 132 and the spherical lens 22 to detect the offset of the center of the spherical lens 22 and to analyze the errors of the multi-axis machine tool 50 by the computer 30. In assembly, only the detector 10 needs to be connected with the spindle 51 of the multi-axis machine tool 50 and the lens device 20 mounted on the turntable 52. Then, the detecting assembly is completely assembled on the multi-axis machine tool 50 and this is convenient and timesaving.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A detecting assembly for multi-axis machine tools (50) having three linear axes (X-, Y and Z-axes), multi-rotation axes, a spindle (51) and a turntable (52), and **characterized in that** the detecting assembly comprises:
a detector (10) having
a mounting frame (11) having
a bottom board (111) having a bottom surface;
two first mounting boards (112) formed on and protruding from the bottom surface of the bottom board (111) and arranged in a line parallel to the X-axis of the multi-axis machine tool (50), and each first mounting board (112) having an inner face facing each other; and
two second mounting boards (114) formed on and protruding from the bottom surface of the bottom board (111) and arranged in a line parallel to the Y-axis of the multi-axis machine tool (50), and each second mounting board (114) having an inner face facing each other;
a first detecting segment (12) mounted on the mounting frame (11) and having
a first light source (121) mounted on one of the first mounting boards (112) of the mounting frame (11); and
a first sensor (122) mounted on the inner face of the other first mounting board (112) that faces to the first light source (121) to receive a light emitted from the first light source (121) and having a receiving surface (123) formed on the first sensor (122) perpendicular to the first light source (121); and
a second detecting segment (13) mounted on the mounting flame (11) and having
a second light source (131) mounted on one of the second mounting boards (114) of the mounting frame (11); and
a second sensor (132) mounted on the inner face of the other second mounting board (114) that faces the second light source (131) to receive light emitted from the second light source (131) and has a receiving surface (133) formed on the second sensor (132) perpendicular to the second light source (131);
a lens device (20) extended into the detector (10) between the mounting boards (112, 114) and having a spherical lens (22), the light sources (121, 131) of the detecting segments (12, 13) emitting light to the corresponding sensors (122, 132) via the spherical lens (22); and
a computer (30) electrically connected to the detector (10) to receive signals that outputted from the sensors (122,132) of the detecting segments (12, 13) of the detector (10) and having a signal processor (31) to calculate and analyze the received signals.

2. The detecting assembly as claimed in claim 1, wherein
the mounting frame (11) has a connecting rod (113) formed on and protruding from the bottom board (111) to connect the spindle (51) of the multi-axis machine tool (50) and the connecting rod (113) having
a forming end formed on the bottom board (111); and
a connecting end adapted to insert in and connect to the spindle (51); and
the lens device (20) has a supporting shaft (21) extending into the detector (10) between the mounting boards (112, 114) to hold the spherical lens (22) in the detector (10) and having
a lower end adapted to mount securely on the turntable (52) of the multi-axis machine tool (50);
an upper end extending into the detector (10) between the inner faces of the mounting boards (112, 114) to hold the spherical lens (22); and
a magnet (23) mounted on the lower end of the supporting shaft (21) to attract with the turntable (52) of the multi-axis machine tool (50).

3. The detecting assembly as claimed in claim 1 or 2, wherein the detecting assembly has two lenses (124, 134), one of the lenses (124, 134) is mounted between the first light source (121) and the first sensor (122) and the other lens (134) is mounted between the second light source (131) and the second sensor (132).

4. The detecting assembly as claimed in claim 3, wherein each sensor (122, 132) is a photoelectric sensor.

5. The detecting assembly as claimed in claim 4, wherein each light source (121,131) emits a collimating beam.

6. The detecting assembly as claimed in claim 4, wherein each light source (121, 131) emits a focusing beam.

7. The detecting assembly as claimed in claim 4 or 5 or 6, wherein each light source (121,131) is a visible light source.

8. The detecting assembly as claimed in claim 4 or 5 or 6, wherein each light source (121, 131) is an invisible light source.

## Patentansprüche

1. Ein Detektionsaufbau für eine Multi-Achsen Werkzeugmaschine (50), das drei lineare Achsen (X-, Y- und Z-Achsen), Multi-Rotationsachsen, eine Spindel (51) und einen Drehtisch (52) aufweist und **dadurch gekennzeichnet ist, dass** der Detektionsaufbau umfasst:
Einen Detektor (10), der einen Montagerahmen (11) mit einer Bodenplatte (111), die eine Bodenoberfläche hat, aufweist;
Zwei erste Montageplatten (112), die an der Bodenoberfläche der Bodenplatte (111) geformt sind und von dieser hervorstehen und in einer Linie parallel zu der X-Achse der Multi-Achsen Werkzeugmaschine (50) angeordnet sind, und jede der ersten Montageplatten (112) eine innere Fläche aufweist, die einander zugewandt sind; und
Zwei zweite Montageplatten (114), die an der Bodenoberfläche der Bodenplatte (111) geformt sind und von dieser hervorstehen und in einer Linie parallel zu der Y-Achse der Multi-Achsen Werkzeugmaschine (50) angeordnet sind, und jede der ersten Montageplatten (114) eine innere Fläche aufweist, die einander zugewandt sind;
Ein erstes Detektierungssegment (12), das an dem Montagerahmen (11) montiert ist und eine erste Lichtquelle (121) aufweist, die an einer der ersten Montageplatten (112) des Montagerahmens (11) montiert ist; und
Einen ersten Sensor (122), der an der Innenfläche der anderen ersten Montagesplatte (112) montiert ist, die der ersten Lichtquelle (121) zugewandt ist, um von der ersten Lichtquelle (121) emittiertes Licht zu empfangen, und der eine Empfängeroberfläche (123) aufweist, die an dem ersten Sensor (122) senkrecht zu der ersten Lichtquelle (121) geformt ist; und
Ein zweites Detektierungssegment (13), das an dem Montagerahmen (11) montiert ist und eine zweite Lichtquelle (131) aufweist, die an einer der zweiten Montageplatten (114) des Montagerahmens (11) montiert ist; und
Einen zweiten Sensor (132), der an der Innenfläche der anderen zweiten Montagesplatte (114) montiert ist, die der ersten Lichtquelle (131) zugewandt ist, um von der zweiten Lichtquelle (131) emittiertes Licht zu empfangen, und der eine Empfängeroberfläche (133) aufweist, die an dem zweiten Sensor (132) senkrecht zu der ersten Lichtquelle (131) geformt ist;
Eine Linsenvorrichtung (20), die sich in den Detektor (10) zwischen den Montageplatten (112, 114) erstreckt und eine sphärische Linse (22) aufweist, wobei die Lichtquellen (121, 131) des Detektionssegmentes (12, 13) Licht zu den korrespondierenden Sensoren (122, 132) über die sphärische Linse (22) emittieren; und
Einen Computer (30), der elektrisch mit dem Detektor (10) verbundenen ist, um Signale zu empfangen, die von den Sensoren (122, 132) des Detektionssegmentes (12, 13) des Detektors (10) ausgegeben werden, und der einen Signalprozessor (31) aufweist, um die empfangenen Signale zu berechnen und zu analysieren.

2. Detektionsaufbau nach Anspruch 1, wobei der Montagerahmen (11) eine an der Bodenplatte (111) geformte und von dieser hervorstehenden Verbindungsstange aufweist, um die Spindel (51) der Multi-Achsen Werkzeugmaschine (50) und die Verbindungsstange (113) zu verbinden, das ein formgebendes Ende, das an der Bodenplatte (111) gebildet ist, aufweist;
Und ein Verbindungsende, das geeignet ist, in die Spindel (51) einzusetzen und sich mit dieser zu verbinden;
Und die Linsenvorrichtung (20) einen Unterstützungsschaft (21) aufweist, der sich in den Detektor (10) zwischen den Montageplatten (112, 114) erstreckt, um die sphärische Linse (22) in dem Detektor (10) zu halten, und der ein unteres Ende aufweist, das geeignet ist, sicher an dem Drehtisch (52) der Multi-Achsen Werkzeugmaschine (50) zu montieren;
Ein sich in den Detektor (10) erstreckendes oberes Ende zwischen den inneren Flächen der Montageplatten (112, 114), um die sphärische Linse zu halten;
Und einen an dem unteren Ende des Unterstützungsschaftes (21) montierten Magneten (23), um den Drehtisch (52) der Multi-Achsen Werkzeugmaschine (50) anzuziehen.

3. Detektionsaufbau nach Anspruch 1 oder 2, wobei der Detektionsaufbau zwei Linsen (124, 134) aufweist, wobei eine der Linsen (124, 134) zwischen der ersten Lichtquelle (121) und dem ersten Lichtsensor (122) montiert ist und die andere Linse (134) zwischen der zweiten Lichtquelle (131) und dem zweiten Sensor (132) montiert ist.

4. Detektionsaufbau nach Anspruch 3, wobei jeder Sensor (122, 132) ein photoelektrischer Sensor ist.

5. Detektionsaufbau nach Anspruch 4, wobei jede Lichtquelle (121, 131) einen fokussierten Strahl emittiert.

6. Detektionsaufbau nach Anspruch 4, wobei jede Lichtquelle (121, 131) einen kollimierten Strahl emittiert.

7. Detektionsaufbau nach Anspruch 4 oder 5 oder 6, wobei jede Lichtquelle (121, 131) eine sichtbare Lichtquelle ist.

8. Detektionsaufbau nach Anspruch 4 oder 5 oder 6, wobei jede Lichtquelle (121, 131) eine unsichtbare Lichtquelle ist.

## Revendications

1. Ensemble de détection pour machine-outil à plusieurs axes (50), qui a trois axes linéaires (axes X-, Y-, et Z-), des axes à rotation multiple, une broche (51) et une plaque tournante (52) et qui est **caractérisée en ce que** l'ensemble de détection comporte:
un détecteur (10) qui a
un cadre de montage (11) avec
une planche de fond (111) avec une surface de fond;
deux premières planches de montage (112), formées sur et faisant saillie de la surface de fond de la planche de fond (111) et étant arrangées dans une ligne parallèle à l'axe X de la machine-outil à plusieurs axes (50), chaque première planche de montage (112) ayant une face intérieure vis-à-vis de l'autre; et
deux deuxièmes planches de montage (114), formées sur et faisant saillie de la surface de fond de la planche de fond (111) et étant arrangées dans une ligne parallèle à l'axe Y de la machine-outil à plusieurs axes (50), chaque deuxième planche de montage (114) ayant une face intérieure vis-à-vis de l'autre;
un premier segment de détection (12), monté sur le cadre de montage (11) et ayant une première source de lumière (121), montée sur une des premières planches de montage (112) du cadre de montage (11),
un premier capteur (122), monté sur la surface intérieure de l'autre première planche de montage (112) et étant vis-à-vis de la première source de lumière (112) pour recevoir une lumière émise de la première source de lumière (112) et ayant une surface récepteur (123) formée sur le premier capteur (122) de façon perpendiculaire par rapport à la première source de lumière (121); et
un deuxième segment de détection (13), monté sur le cadre de montage (11) et ayant une deuxième source de lumière (131), montée sur une des deuxièmes planches de montage (114) du cadre de montage (11),
un deuxième capteur (132), monté sur la surface intérieure de l'autre deuxième planche de montage (114) et étant vis-à-vis de la deuxième source de lumière (131) pour recevoir de la lumière émise de la deuxième source de lumière (131) et ayant une surface récepteur (133) formée sur le deuxième capteur (132) de façon perpendiculaire par rapport à la deuxième source de lumière (131); et
un dispositif de lentille (20) qui s'étend dans le détecteur (10) entre les planches de montage (112, 114) et a une lentille sphérique (22), les sources de lumière (121, 131) des segments de détection (12, 13) émettant de la lumière aux capteurs respectifs (122, 132) à travers la lentille sphérique (22); et
un ordinateur (30) électriquement raccordé au détecteur (10) pour recevoir des signaux sortis à partir des capteurs (122, 132) des segments de détection (12, 13) du détecteur (10) et ayant un processeur de signaux (31) pour calculer et analyser les signaux reçus.

2. Ensemble de détection selon la revendication 1, dans lequel
le cadre de montage (11) a une tige de connexion (113), formée sur et faisant saillie de la planche de fond (111) pour raccorder la broche (51) de la machine-outil à plusieurs axes (50), la tige de connexion (113) ayant
un bout formateur, formé sur la planche de fond (111); et
un bout connecteur, adapté pour s'insérer dans et raccorder avec la broche (51); et
le dispositif de lentille (20) a un fût de support (21) s'étendant à l'intérieur du détecteur (10) entre les planches de montage (112, 114) pour tenir la lentille sphérique (22) dans le détecteur (10) et ayant
un bout inférieur adapté pour être monté de façon assurée sur la plaque tournante (52) de la machine-outil à plusieurs axes (50);
un bout supérieur s'étendant à l'intérieur du détecteur (10) entre les surfaces intérieures des planches de montage (112, 114) pour tenir la lentille sphérique (22); et
un aimant (23), monté sur le bout inférieur du fût de support (21) pour solliciter avec la plaque tournante (52) de la machine-outil à plusieurs axes (50).

3. Ensemble de détection selon la revendication 1 ou 2, dans lequel l'ensemble de détection a deux lentilles (124, 134), une des lentilles (124, 134) étant montée entre la première source de lumière (121) et le premier capteur (122), et l'autre lentille (134) étant montée entre la deuxième source de lumière (131) et le deuxième capteur (132).

4. Ensemble de détection selon la revendication 3, dans lequel chaque capteur (122, 132) est un capteur photoélectrique.

5. Ensemble de détection selon la revendication 4, dans lequel chaque source de lumière (121, 131) émet un rayon de collimation.

6. Ensemble de détection selon la revendication 4, dans lequel chaque source de lumière (121, 131) émet un rayon de focalisation.

7. Ensemble de détection selon la revendication 4 ou 5 ou 6, dans lequel chaque source de lumière (121, 131) est une source de lumière visible.

8. Ensemble de détection selon la revendication 4 ou 5 ou 6, dans lequel chaque source de lumière (121, 131) est une source de lumière invisible.
